(19) **Europäisches Patentamt / European Patent Office / Office européen des brevets**

(11) **EP 4 290 267 B1**

(12) **FASCICULE DE BREVET EUROPEEN**

(45) Date de publication et mention de la délivrance du brevet:
**09.10.2024 Bulletin 2024/41**

(21) Numéro de dépôt: **23176233.7**

(22) Date de dépôt: **30.05.2023**

(51) Classification Internationale des Brevets (IPC):
**G01S 5/02** *(2010.01)*      **G01S 19/39** *(2010.01)*
**G01S 5/14** *(2006.01)*      **G01S 5/30** *(2006.01)*
**G01S 19/42** *(2010.01)*

(52) Classification Coopérative des Brevets (CPC):
**G01S 19/393; G01S 5/0294;** G01S 5/145;
G01S 5/30; G01S 19/426

(54) **PROCÉDÉ DE LOCALISATION D'UNE UNITÉ DE NAVIGATION**

VERFAHREN ZUR LOKALISIERUNG EINER NAVIGATIONSEINHEIT

METHOD FOR LOCATING A NAVIGATION UNIT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **02.06.2022 FR 2205306**

(43) Date de publication de la demande:
**13.12.2023 Bulletin 2023/50**

(73) Titulaire: **Commissariat à l'énergie atomique et aux énergies alternatives**
**75015 Paris (FR)**

(72) Inventeurs:
• **VILLIEN, Christophe**
**38054 GRENOBLE Cedex 09 (FR)**
• **COMBETTES, Christophe**
**38054 GRENOBLE Cedex 09 (FR)**

(74) Mandataire: **INNOV-GROUP**
**310, avenue Berthelot**
**69372 Lyon Cedex 08 (FR)**

(56) Documents cités:
**FR-A1- 3 066 027**     **US-A1- 2015 268 354**
**US-B1- 6 324 473**

• **AI QINGSONG ET AL: "Evaluation and mitigation of the influence of pseudorange biases on GNSS satellite clock offset estimation", MEASUREMENT, INSTITUTE OF MEASUREMENT AND CONTROL. LONDON, GB, vol. 193, 10 March 2022 (2022-03-10), XP087008180, ISSN: 0263-2241, [retrieved on 20220310], DOI: 10.1016/J.MEASUREMENT.2022.111015**

**Description**

L'invention concerne un procédé de localisation d'une unité de navigation. L'invention concerne également un support d'enregistrement d'informations et une unité de navigation pour la mise en oeuvre de ce procédé.

Les procédés de localisation permettent de localiser une unité de navigation dans un environnement comportant des balises qui émettent des messages. Par exemple, ces balises sont des satellites en orbite autour de la terre. Lorsque les balises sont les satellites, l'unité de navigation est connue sous le terme de segment utilisateur du système GNSS (« *Global Navigation Satellite System* »). Le GNSS américain est connu sous l'acronyme GPS ("Global Positioning System").

Typiquement, les procédés connus de localisation comportent les étapes suivantes :

a) la réception des messages émis par au moins trois balises, puis
b) l'extraction de mesures brutes de pseudo-distances qui séparent l'unité de navigation de chacune des balises à partir des instants de réception de ces messages mesurés par l'unité de navigation et de la vitesse de propagation de ces messages dans l'espace, puis
c) l'estimation d'une position de l'unité de navigation à partir des mesures brutes extraites.

Cet état de la technique est par exemple divulgué dans US2015/268354A1, US6324472B1 et l'article de Al Quingsong et AL : « Evaluation and mitigation of the influence of pseudorange biaises on GNSS satellite clock offset estimation », Measurement, Institute of Measurement and Control, London, Vol. 193, 10/03/2022.

Pour améliorer la précision de la position estimée, il est connu de corriger les mesures brutes de pseudo-distance avant qu'elles soient utilisées pour estimer la position de l'unité de navigation. En effet, les signaux émis par les balises peuvent être fortement bruités. Pour corriger les mesures brutes, les documents suivants ont proposés des procédés qui utilisent la précédente position estimée pour l'unité de navigation :

- la demande de brevet FR3066027A1, et
- A. Giremus, J.-Y. Tourneret et V. Calmettes : "A particle filtering approach for joint detection/ estimation of multipath effects on GNSS measurements", IEEE Trans. Signal Processing, 2007.

Ces procédés sont avantageux car ils permettent d'améliorer la précision de la localisation par rapport aux procédés de localisation qui ne corrige pas les mesures brutes des pseudo-distances en fonction de la précédente position de l'unité de navigation. Toutefois, en pratique, ces procédés sont peu robustes et risquent de diverger au fil du temps. En effet, une erreur dans la correction des mesures brutes des pseudo-distances introduit une erreur dans la position estimée. Or, lors de l'itération suivante du procédé, c'est la position estimée avec une erreur qui est utilisée pour corriger les nouvelles mesures brutes des pseudo-distances. L'erreur commise sur l'estimation de la position peut alors accroître, lors de l'itération suivante, l'erreur commise lors de la correction des mesures brutes des pseudo-distances. Ainsi, il peut apparaître une rétroaction qui amplifie l'erreur au lieu de la compenser.

L'invention vise à remédier à cet inconvénient en proposant un procédé de localisation utilisant la position de l'unité de navigation pour corriger les mesures brutes des pseudo-distances tout en étant plus robuste.

Elle a donc pour objet un procédé de localisation d'une unité de navigation conforme à la revendication 1.

L'invention a également pour objet un support d'enregistrement d'informations, lisible par un microprocesseur, comportant des instructions exécutables par ce microprocesseur, dans lequel ce support comporte des instructions non transitoires pour l'exécution du procédé de localisation ci-dessus, lorsque ces instructions sont exécutées par le microprocesseur.

Enfin, l'invention a aussi pour objet une unité de navigation configurée pour mettre en oeuvre le procédé ci-dessus.

L'invention sera mieux comprise à la lecture de la description qui va suivre, donnée uniquement à titre d'exemple non limitatif et faite en se référant aux dessins sur lesquels :

- la figure 1 est une illustration schématique d'un système de localisation d'un véhicule comportant une unité de navigation ;
- la figure 2 est une illustration schématique de l'unité de navigation du système de la figure 1,
- la figure 3 est une illustration schématique de différents modules logiciels mis en oeuvre dans l'unité de navigation de la figure 2;
- la figure 4 est un organigramme d'un procédé de localisation à l'aide de l'unité de navigation de la figure 2 ;
- la figure 5 est un organigramme d'un procédé de sélection de mesures mis en oeuvre dans le procédé de la figure 4.

Dans ces figures, les mêmes références sont utilisées pour désigner les mêmes éléments.

Dans la suite de cette description, les caractéristiques et fonctions bien connues de l'homme du métier ne sont pas décrites en détail.

Dans cette description, des exemples détaillés de modes de réalisation sont d'abord décrits dans le chapitre I en référence aux figures. Ensuite, dans le chapitre II suivant, des variantes de ces modes de réalisation sont introduites. Enfin, les avantages des différents modes de réalisation sont présentés dans un chapitre III.

Chapitre I : Exemples de modes de réalisation

Par la suite, un mode de réalisation détaillé de l'invention est décrit dans le contexte particulier de la localisation d'un véhicule à la surface de la terre. Dans ce contexte particulier, les balises qui émettent des messages à partir desquels le véhicule peut être localisé sont des satellites en orbite autour de la terre.

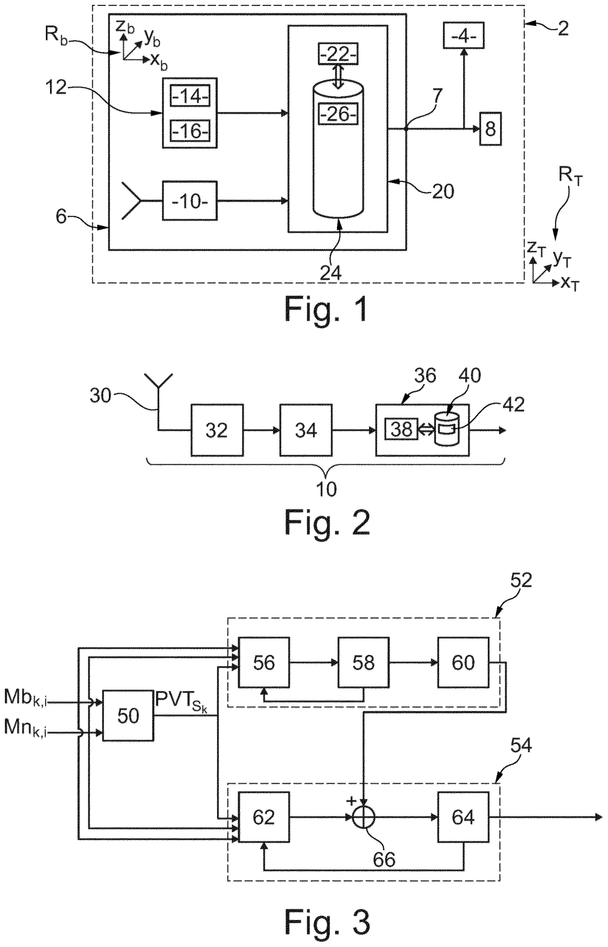

La figure 1 représente un véhicule 2 capable de se déplacer à la surface de la terre. A cet effet, par exemple, le véhicule 2 comporte des roues ou des chenilles. Le véhicule 2 est aussi équipé de moyens 4 de propulsion tel qu'un moteur qui entraîne les roues ou les chenilles.

Le véhicule 2 est équipé d'un système 6 de géolocalisation de ce véhicule. Ce système 6 est apte à déterminer la position, l'orientation et la vitesse du véhicule 2 dans un repère terrestre $R_T$. Ici, le repère terrestre $R_T$ est fixé sans aucun degré de liberté à la terre. Le repère $R_T$ comporte trois axes typiquement orthogonaux entre eux. Un repère mobile $R_b$ est également fixé sans aucun degré de liberté au véhicule 2. Ce repère $R_b$ comporte trois axes orthogonaux entre eux notés respectivement $x_b$, $y_b$ et $z_b$.

Ici, la position du véhicule 2 dans le repère $R_T$ est exprimée par la latitude L, la longitude $\lambda$ et l'altitude h de l'origine du repère $R_b$.

L'orientation du véhicule 2 est exprimée par l'angle $\psi$ de lacet (« yaw angle » en anglais), l'angle $\theta$ de tangage (« pitch angle » en anglais) et l'angle $\varphi$ de roulis (« roll angle » en anglais) du repère $R_b$ par rapport au repère $R_T$.

La position, l'orientation et la vitesse déterminées par le système 6 sont délivrées sur une sortie 7.

Typiquement, le véhicule 2 comporte un poste 8 de pilotage pour guider ou assister au guidage du véhicule 2 vers une destination prédéfinie. Le poste 8 est raccordé à la sortie 7. Le poste 8 peut être un poste de pilotage manuel et/ou automatique. Dans le cas d'un poste de pilotage manuel, la position, l'orientation et la vitesse déterminées sont transmises à une interface homme-machine pour assister un être humain dans le pilotage des moyens 4 de propulsion. Dans le cas d'un poste de pilotage automatique, la position, l'orientation et la vitesse déterminées sont automatiquement converties en commandes de pilotage des moyens 4 de propulsion, puis transmises automatiquement à ces moyens 4 de propulsion.

Le système 6 comporte une unité 10 de navigation et une unité 12 de mesure inertielle.

L'unité 10 de navigation est capable de déterminer sa position dans le repère $R_T$ à partir de messages émis par les satellites. Par exemple, ici, les satellites sont les satellites la constellation GPS ("Global Positioning System"). Dans ce contexte, l'unité 10 est connue sous l'acronyme GNSS (« *Global Navigation Satellite System* ») et correspond au segment utilisateur de ce système GNSS. A partir des signaux satellitaires qu'elle reçoit, l'unité 10 génère des signaux représentatifs de la position et de la vitesse du véhicule dans le repère $R_T$.

L'unité 12 est connue sous l'acronyme IMU (« *Inertial Measurement Unit* »). L'unité 12 comporte notamment un accéléromètre triaxe 14 et un gyromètre triaxe 16. Grâce à ces capteurs, l'unité 12 est capable de mesurer la variation de l'orientation du véhicule 2.

Pour déterminer la position, l'orientation et la vitesse du véhicule 2 à partir des mesures des unités 10 et 12, le système 6 comporte un calculateur électronique programmable 20. Ce calculateur 20 est apte à acquérir les mesures des unités 10 et 12 et, à partir de ces mesures, à déterminer la position, l'orientation et la vitesse du véhicule 2 dans le repère $R_T$. Le calculateur 20 comporte un microprocesseur 22 et une mémoire 24.

La mémoire 24 comporte notamment les instructions d'un module logiciel 26 apte à déterminer la position, l'orientation et la vitesse du véhicule 2 à partir des mesures des unités 10 et 12 lorsqu'il est exécuté par le microprocesseur 22. Le module 26 implémente notamment un algorithme de fusion qui établit, à partir d'une précédente estimation de la position, de l'orientation et de la vitesse du véhicule 2 et de nouvelles mesures des unités 10 et 12 acquises depuis cette précédente estimation, une nouvelle estimation de la position, de l'orientation et de la vitesse du véhicule 2. L'algorithme de fusion établit également des marges d'erreur sur chaque nouvelle estimation.

De tels algorithmes de fusion sont bien connus de l'homme du métier. Par exemple, une présentation de l'état de l'art en la matière peut être trouvée dans la thèse suivante : S. Godha, "Performance Evaluation of Low Cost MEMS-Based IMU Integrated With GPS for Land Vehicle Navigation Application", PhD report, 2006. Par la suite, cette thèse est désignée par l'expression "Godha2006".. Typiquement, cet algorithme de fusion implémente un ou plusieurs filtres de Kalman. Ici, le module 26 implémente une architecture connue sous le terme de "en boucle fermée" ("closed loop intégration scheme" ou "closed loop approach" en anglais).

La figure 2 représente plus en détail les principaux composants de l'unité 10. L'unité 10 comporte successivement :

- une antenne 30 pour recevoir les signaux GNSS émis par les satellites,
- un étage 32 d'entrée, connu sous le terme anglais de "RF front end", raccordé à l'antenne 30 et qui assure l'amplification, le filtrage, la transposition en fréquence ainsi que la numérisation des signaux GNSS émis,
- un étage 34 de traitement en bande de base, connu sous le terme anglais de "Baseband processor" qui reçoit les signaux traités par l'étage 32 d'entrée, et
- un processeur électronique 36 de navigation, connu sous le terme anglais de "Navigation processor" qui traite les données transmises par l'étage 34 pour localiser l'unité 10.

L'étage 34 acquière les signaux traités par l'étage 32, les démodule et extrait des signaux démodulés les données suivantes :

- des mesures brutes Mb relatives à ces signaux, et
- des messages émis Mn par les satellites.

Les messages émis par les satellites sont connus sous le terme "Messages GNSS".

Typiquement, les mesures brutes Mb contiennent pour chaque satellite ayant émis un signal GNSS reçu par l'unité 10, au moins une mesure brute $Mb_{k,i}$ de la pseudo-distance qui sépare l'unité 10 de ce satellite. Par exemple, cette mesure brute $Mb_{k,i}$ de pseudo-distance est calculée ici à l'aide de la relation suivante : $Mb_{k,i} = (tr_{k,i}-te_{k,i}) \times c$, où:

- l'indice i est un identifiant du satellite,
- l'indice k est un identifiant d'un instant $t_k$ défini plus loin,
- $Mb_{k,i}$ est la mesure brute de la pseudo-distance entre l'unité 10 et le satellite identifié par l'indice i,
- $tr_{k,i}$ est l'instant de réception du message mesuré par l'étage 34,
- $te_{k,i}$ est l'instant d'émission du message par le satellite i, cette instant $te_{k,i}$ étant ici contenu dans le message émis par le satellite,
- c est la célérité de la lumière, et
- "x" est le symbole qui représente l'opération de multiplication.

Éventuellement, les mesures brutes peuvent contenir d'autres mesures pour chaque satellite comme :

- une mesure Doppler ou décalages de fréquence,
- une mesure de phase de l'onde porteuse du signal GNSS émis, et
- l'instant de réception du signal GNSS émis.

Ces autres mesures peuvent être utilisées pour estimer, en plus de la position de l'unité 10, d'autres grandeurs physiques comme la vitesse ou l'erreur d'horloge de l'unité 10. Par la suite, lorsque d'autres grandeurs physiques que la position de l'unité 10 sont estimées, il est considéré que ces autres grandeurs physiques sont estimées de façon conventionnelle. Ainsi, par la suite, seul le traitement des mesures brutes de pseudo-distances est décrit en détail.

Les messages Mn contiennent pour chaque satellite ayant émis un signal GNSS reçu par l'unité 10 : des éphémérides ou des paramètres permettant d'estimer les positions et vitesses du satellite. Les messages Mn contiennent aussi éventuellement pour chaque satellite d'autres données comme :

- des paramètres de corrections d'erreurs d'horloge du satellite,
- des éléments caractérisant l'état du satellite et l'état de sa mesure,
- des paramètres d'un modèle d'estimation des délais de propagation à travers l'ionosphère et la troposphère.

Le processeur 36 comporte typiquement un microprocesseur 38 et un mémoire 40. La mémoire 40 contient les instructions d'un logiciel 42 de localisation qui localise l'unité 10 à partir des signaux émis par les satellites lorsqu'il est exécuté par le microprocesseur 38. Dans ce mode de réalisation, localiser l'unité 10 signifie calculer la position, la vitesse et l'erreur d'horloge de l'unité 10, c'est-à-dire calculer une solution, connue sous l'acronyme PVT (Position, vitesse et temps), pour l'unité 10.

Plus précisément, le logiciel 42 met à jour la solution PVT de l'unité 10 à chaque instant $t_k$ d'une suite temporelle d'instants $\{t_0; ...; t_{k-1}; t_k; ...\}$. Par exemple, cette suite temporelle est un suite périodique d'instants $t_k$ et la période entre deux instants $t_k$ successifs est égale à la période d'échantillonnage des signaux GNSS. Par la suite, la solution PVT délivrée par l'unité 10 au calculateur 20 à l'instant $t_k$ est notée $PVT_k$. Dans ce texte, l'indice k est également utilisé pour identifier les nouvelles mesures, les nouveaux messages et les nouvelles grandeurs physiques utilisées pour estimer la solution $PVT_k$. Ainsi, les nouvelles mesures brutes Mb et les nouveaux messages Mn obtenus à partir du signal GNSS d'un satellite et utilisés pour estimer la solution $PVT_k$ sont notés, respectivement, $Mb_{k,i}$ et $Mn_{k,i}$, où l'indice i est un identifiant de ce satellite. Pour estimer la solution $PVT_k$, les mesures $Mb_{k,i}$ et les messages $Mn_{k,i}$ d'au moins trois et, dans ce mode de réalisation, d'au moins quatre satellites sont utilisés. En pratique le nombre de satellites dont les messages GNSS sont reçus par l'unité 10 est souvent supérieur à cinq ou huit. Ainsi, l'indice i est ici un nombre entier qui varie de 1 à plus de 4, 5 ou 8.

La figure 3 représente l'architecture du logiciel 42 de localisation. Le logiciel 42 comporte un module 50 d'estimation de la position des satellites à partir des mesures $Mb_{k,i}$ et des données contenues dans les messages $Mn_{k,i}$. Plus précisément, ici, pour chaque instant $t_k$, le module 50 estime les nouvelles positions, les nouvelles vitesses et les nouvelles erreurs d'horloges des satellites à partir des mesures $Mb_{k,i}$ et des messages $Mn_{k,i}$ reçus depuis l'instant précédent $t_{k-1}$. Autrement dit, le module 50 estime la solution PVT de chaque satellite i pour l'instant $t_k$. Cette solution PVT du satellite i pour l'instant $t_k$ est notée $PVTs_{k,i}$ par la suite. On note $PVTs_k$, le vecteur dont la i-ième coordonnée est égale à la solution $PVTs_{k,i}$.

De nombreuses méthodes sont connues pour estimer la solution $PVTs_{k,i}$ à partir des mesures $Mb_{k,i}$ et des messages $Mn_{k,i}$. Par exemple, dans un premier temps, les instants d'émission des signaux GNSS sont estimés à partir :

- de la mesure des instants $tr_k$ de réception de ces signaux GNSS par l'unité 10, et
- de la mesure des pseudo-distances entre les satellites et l'antenne 30.

Dans un second temps, les positions, vitesses et erreurs d'horloges des satellites sont estimées en exécutant un algorithme qui utilise des paramètres fournis dans les messages $Mn_{k,i}$. Par exemple, cet algorithme est l'un de ceux proposés dans les articles suivants :

- Global navigation satellite system Glonass ICD Navigational radiosignal in bands L1, L2, Edition 5.1, Russian Institute of Space Device Engineering, 2008, pages 41-49
- Navstar GPS Space Segment/Navigation User Interfaces, IS-GPS-200, Revision D, ARINC, March 2006, pages 83-98

Ensuite le logiciel 42 comporte :

- un processus 52 qui établit des biais $c2_{k,i}$ de mesure qui sont pratiquement indépendant de la précédente solution $PVT_{k-1}$, et
- un processus 54 qui estime la solution $PVT_k$ en utilisant les biais de mesures $c2_{k,i}$ pour corriger les mesures brutes $Mb_{k,i}$ et ainsi améliorer la précision de la solution $PVT_k$.

Un biais de mesure est une valeur qui, lorsqu'elle est retranchée à une mesure brute permet de diminuer l'erreur entachant cette mesure brute.

Le processus 52 reçoit en entrée les mesures $Mb_{k,i}$, les données contenues dans les messages $Mn_{k,i}$ et les solutions $PVTs_{k,i}$ estimées par le module 50. Ce processus 52 fournit en sortie les biais $c2_{k,i}$ établis. Ce processus 52 contient trois modules qui sont exécutés les uns après les autres : un module 56 de correction et de sélection des mesures, un module 58 d'estimation d'une position interne $P1_k$ et un module 60 d'estimation des biais $c2_{k,i}$.

Le processus 54 d'estimation de la solution $PVT_k$ a pour données d'entrée : les solutions $PVTs_{k,i}$, les messages $Mn_{k,i}$, les mesures brutes $Mb_{k,i}$ et les biais $c2_{k,i}$ établis par le processus 52. Ce processus 54 se divise en deux modules exécutés l'un après l'autre : un module 62 de correction et de sélection des mesures $Mb_{k,i}$ qui délivre des mesures pré-corrigées $Mc2_{k,i}$ et un module 64 d'estimation d'une solution externe $PVT2_k$. La solution externe est délivrée au calculateur 20. Ainsi, la solution $PVT2_k$ et la solution $PVTk$ sont les mêmes. Le processus 54 comporte aussi un soustracteur 66 qui retranche les biais $c2_{k,i}$ aux mesures pré-corrigées $Mc2_{k,i}$ délivrées par le module 62.

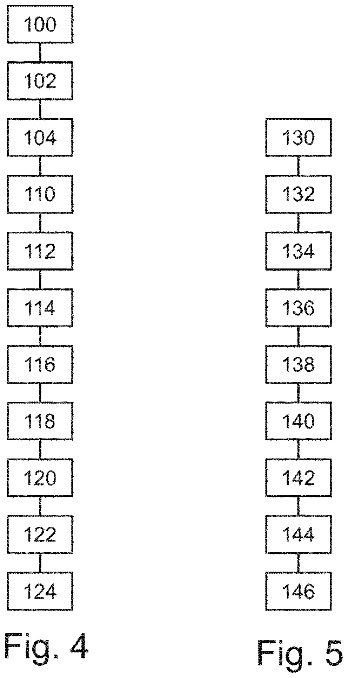

Des exemples de réalisation des différents modules du logiciel 42 et le fonctionnement de l'unité 10 est maintenant décrit en référence au procédé de la figure 4.

Pour chaque instant $t_k$ pour lequel une nouvelle solutions $PVT_k$ doit être délivrée au calculateur 20, l'unité 10 exécute les étapes suivantes.

Lors d'une étape 100, l'étage 32 reçoit de nouveaux signaux GNSS émis par au moins trois satellites. Ces signaux GNSS sont qualifiés de "nouveau" dans le sens où ils sont reçus après les signaux GNSS utilisés pour estimer la précédente solution $PVT_{k-1}$. Typiquement, lors de l'étape 100, l'étage 32 reçoit les signaux GNSS émis par plus de quatre et habituellement plus de huit satellites.

Lors d'une étape 102, l'étage 34 extrait, des nouveaux signaux GNSS reçus, les mesures brutes $Mb_{k,i}$ et les messages émis $Mn_{k,i}$ pour chacun des satellites.

Ensuite, lors d'une étape 104, le module 50 estime les nouvelles solutions $PVTs_{k,i}$ à partir des mesures $Mb_{k,i}$ et des messages $Mn_{k,i}$ reçus.

Lors d'une étape 110, le module 56 pré-corrige les mesures $Mb_{k,i}$ pour obtenir des mesures pré-corrigées

$Mc1_{k,i}$. Ici, les mesures pré-corrigées $Mc1_{k,i}$ sont obtenues à partir des mesures $Mb_{k,i}$, des donnes contenues dans les messages $Mn_{k,i}$, des solutions $PVTs_{k,i}$ estimée par le module 50 et de la précédente position interne $P1_{k-1}$.

Typiquement, les mesures pré-corrigées $Mc1_{k,i}$ sont obtenues à l'aide de la relation suivante :

$$Mc1_{k,i} = Mb_{k,i} - c1_{k,i}$$

où $c1_{k,i}$ est la correction estimée lors de cette étape.

La correction $c1_{k,i}$ est établie en utilisant un modèle prédéterminé m1 des perturbations introduites par le fait que les signaux GNSS traversent la ionosphère et la troposphère. Ici, ce modèle m1 est paramétré par les solutions $PVTs_{k,i}$ et la position $P1_{k-1}$. Par exemple, ici le modèle m1 est le modèle défini dans l'article suivant: Collins, J.P., Assessment and Development of a Tropospheric Delay Model for Aircraft Uservv of the Global Positioning System, Technical Report No. 203, University of New Brunswick, 1999, pages 96-97 . Dans ce cas, la correction $c1_{k,i}$ est calculée à l'aide de la relation (2) suivante :

$$c1_{k,i} = \frac{A(P1_{k-1})}{sin(\theta) + \dfrac{0.00143}{tan(\theta) + 0.0455}}$$

où :

- l'angle $\theta$ est l'angle d'élévation, c'est-à-dire l'angle entre le plan tangent à la surface de la Terre au point défini par la position $P1_{k-1}$ et la droite reliant le satellite à ce point de la Terre, et
- $A(P1_{k-1})$ est une fonction définie par la relation suivante :

$$A = \begin{cases} 2.464 - 3.248 \times 10^{-4} \times h + 0.2395 \times 10^{-8} \times h^2 ; h < 1000m \\ 2.284 \times exp\left(-0.1226 \times (h \times 10^{-3} - 1)\right) - 0.122 ; 1000m < h < 9000m \\ 0.7374 \times exp(1.2816 - 1.424 \times 10^{-4} \times h) ; 9000m < h \end{cases}$$

où :

- h est la hauteur orthométrique de l'unité 10 obtenue à partir de la position $P1_{k-1}$, et
- pour chaque ligne de cette relation, le terme après le point virgule indique pour quelle plage de hauteurs orthométriques cette ligne doit être utilisée pour calculer $A(P1_{k-1})$,
- m signifie l'unité de longueur mètre.

La hauteur orthométrique h est estimée à partir la position $P1_{k-1}$ et d'un système géodésique.

Lors d'une étape 112, le module 56 sélectionne les mesures pré-corrigées $Mc1_{k,i}$ qui sont les seules à être utilisées dans la suite du processus 52. Le but de cette sélection est d'éliminer des mesures $Mc1_{k,i}$ considérées comme étant trop erronées afin de ne pas les prendre en compte lors de l'estimation de la position $P1_k$. Cela permet d'améliorer la précision. Un exemple détaillé de mode de réalisation de cette étape 112 est décrit plus loin en référence à la figure 5. Les étapes suivantes du processus 52 utilisent uniquement les mesures sélectionnées lors de l'étape 112 pour calculer les biais $c2_{k,i}$. Les mesures non-sélectionnées ne sont pas utilisées pour calculer les biais $c2_{k,i}$ de sorte que les biais $c2_{k,i}$ pour lesquels l'indice i correspond à une mesure non-sélectionnée, ne sont pas mis à jour par le processus 52 pour l'instant $t_k$. Autrement dit, pour les indices i qui correspondent à des mesures non-sélectionnées, le biais $c2_{k,i}$ est pris égal à $c2_{k-1,i}$. De façon similaire, pour les indices i qui correspondent à des mesures non-sélectionnées, la variance du biais $c2_{k,i}$ n'est pas mise à jour. Elle est donc égale à la variance du biais $c2_{k-1,i}$. Pour les étapes suivantes du processus 52, l'indice i correspond uniquement aux indices i des mesures sélectionnées.

Lors d'une étape 114, le module 58 estime la position $P1_k$ à partir des mesures pré-corrigées $Mc1_{k,i}$ sélectionnées lors de l'étape 112, des solutions $PVTs_{k,i}$ estimées lors de l'étape 104 et de la position précédente $P1_{k-1}$.

Ici, le module 58 estime la position $P1_k$ par minimisation de la fonction de coût $f_1$ suivante :

$$f_1\left(X, Mc1_{k,i}, PVTs_k\right) = \sum_{i \in Ipmin} \omega_i \left( Mc1_{k,i} - \left( \left\| \begin{matrix} x_k - xs_{k,i} \\ y_k - ys_{k,i} \\ z_k - zs_{k,i} \end{matrix} \right\| + x_{t,k} \right) \right)^2$$

où :

- $x_k$, $y_k$, $z_k$ sont les coordonnées spatiales à déterminer de la position $P1_k$ de l'unité 10,
- $x_{t,k}$ est l'erreur d'horloge à déterminer de l'unité 10 exprimée sous la forme d'une distance ajoutée à la pseudo-distance calculée,
- X est le vecteur de coordonnées $x_k$, $y_k$, $z_k$ et $x_{t,k}$,
- $xs_{k,i}$, $ys_{k,i}$ et $zs_{k,i}$ sont les coordonnées spatiales du satellite i issues de la solution $PVTs_{k,i}$ estimée par le module 50,
- $Mc1_{k,i}$ est la i-ème mesure pré-corrigée lors de l'étape 110,
- $w_i$ est un poids affecté à la i-ème mesure $Mc1_{k,i}$, et
- Ipmin est l'ensemble qui contient les indices i des mesures sélectionnées lors de l'étape 112.

La valeur de chaque poids $w_i$ est prédéterminée en fonction, par exemple, de l'élévation du satellite i, du rapport signal à bruit mesuré pour le satellite i, de la vitesse à laquelle varie la distance entre l'unité 10 et ce satellite. Dans une variante simplifiée, les poids $w_i$ sont constants et, par exemple, tous égaux à un.

Les valeurs des coordonnées du vecteur X qui minimisent la fonction de coût $f_1$ sont estimées en utilisant un algorithme de Gauss-Newton par exemple, ou tout autre algorithme d'optimisation tels que les algorithmes de Levenberg-Marquardt, la descente de gradient ou autre qui sont généralement des algorithmes itératifs. Les valeurs initiales des coordonnées du vecteur X sont choisies, par exemple, égale à zéro. Ici, la recherche des valeurs des coordonnées du vecteur X qui minimisent la fonction $f_1$ est arrêtée :

- après un nombre prédéterminé d'itérations, par exemple compris entre deux et vingt, ou
- lorsque la mise à jour du vecteur X devient faible, c'est-à-dire que la norme de la différence entre le vecteur X obtenu à l'issue de l'itération courante et le vecteur X obtenu à l'issue de la précédente itération, est inférieure à un seuil prédéterminé. Ce seuil prédéterminé est, par exemple, compris entre $10^{-4}$ ou $10^{-10}$.

Lors d'une étape 116, le module 60 établit les valeurs des biais $c2_{k,i}$ à partir des mesures pré-corrigées $Mc1_{k,i}$, des solutions $PVTs_{k,i}$ et de la position $P1_k$. Ici, les biais de mesure $c2_{k,i}$ sont estimés en minimisant une fonction de coût, notée $f_2$, dépendant des biais de mesure $c2_{k-1,i}$ établis pour l'instant précédent $t_{k-1}$.

Par exemple, la fonction de coût $f_2$ est définie par la relation suivante :

$$f_2\left(X, Mc1_{k,i}, P1_k, c2_{k-1,i}\right) = \left\| r\left(Mc1_k, P1_k\right) - X \right\|_{R_C^{-1}}^2 + \left\| X - c2_{k-1} \right\|_{P_{C,k-1}^{-1}}^2$$

où :

- $Mc1_k$ est le vecteur formé par les mesures $Mc1_{k,i}$ pour i appartenant à l'ensemble Ipmin,
- $c2_{k-1}$ est le vecteur formé par les biais $c2_{k-1,i}$ pour i appartenant à l'ensemble Ipmin.

La fonction $r(Mc1_k, P1_k)$ est un vecteur de résidus de mesures entre $Mc1_k$ et les mesures estimées en fonction de $P1_k$. La i-ème composante $r_i$ du vecteur de résidus est définie par la relation suivante :

$$r_i = Mc1_{k,i} - \left( \sqrt{\left(x_k - xs_{k,i}\right)^2 + \left(y_k - ys_{k,i}\right)^2 + \left(z_k - zs_{k,i}\right)^2} + x_{t,k} \right)$$

Dans ce texte, le symbole $\left\| A \right\|_{R^{-1}}^2$ désigne la norme au carrée du vecteur A issue du produit scalaire définie par la matrice définie positive $R^{-1}$. Cette norme est définie par la relation suivante :

$$\|A\|_{R^{-1}}^2 = A^T R^{-1} A$$

où, dans ce texte, le symbole "$^T$" désigne l'opération transposée, et le symbole "$^{-1}$" désigne l'opération d'inversion d'une matrice.

La matrice $R_c$ est la matrice de covariance des résidus du vecteur $r(Mc1_k, P1_k)$. Par exemple, ici, la matrice $R_c$ est diagonale et ses éléments sont tous égaux à 25 m$^2$.

La matrice $P_{c,k}$ est la matrice de covariance des biais $c2_{k,i}$. Elle est mise à jour à pour chaque instant $t_k$ selon la relation suivante :

$$P_{c,k} = \left(P_{c,k-1}{}^{-1} + R_c{}^{-1}\right)^{-1}$$

Une fois les biais $c2_{k,i}$ établis, l'exécution du processus 52 est terminée et l'exécution du processus 54 débute.

Lors d'une étape 118, le module 62 pré-corrige les mesures $Mb_{k,i}$ pour obtenir des secondes mesures pré-corrigées $Mc2_{k,i}$. Ici, les mesures pré-corrigées $Mc2_{k,i}$ sont obtenues à partir des mesures $Mb_{k,i}$, des données contenues dans les messages $Mn_{k,i}$, des solutions $PVTs_{k,i}$ estimées par le module 50 et de la précédente solution externe $PVT2_{k-1}$. Ici, l'étape 118 est identique à l'étape 110 sauf que la position $P2_{k-1}$ contenue dans la solution $PVT2_{k-1}$ est utilisée à la place de la position $P1_{k-1}$.

Une fois les étapes 114 et 118 terminées, lors d'une étape 120, des mesures corrigées $Mc3_{k,i}$ sont calculées à l'aide de la relation suivante :

$$Mc3_{k,i} = Mc2_{k,i} - c2_{k,i}$$

Ensuite lors d'une étape 122, le module 64 estime la solution $PVT2_k$ à partir des solutions des satellites $PVTs_{k,i}$, des mesures corrigées $Mc3_{k,i}$ et la précédente solution $PVT2_{k-1}$. Dans cet exemple de réalisation, la solution $PVT2_k$ est estimée par minimisation de la fonction de coût $f_3$ suivante :

$$f_3\left(X, Mc3_{k,i}, PVTs_{k,i}, PVT2_{k-1,i}\right) = \|Mc3_k - h(X)\|_{R_{Mc3}^{-1}}^2 + \|X - f(PVT2_{k-1})\|_{P_{PVT2}^{-1}}^2$$

où :

- X est le variable permettant de minimiser la fonction $f_3$, elle contient la solution $PVT2_{k,i}$ et donc les éléments suivants : $X^T = (x, y, z, v_x, v_y, v_z, x_t, dx_t)$, avec :
- x, y et z sont les coordonnées de la position $P2_k$ de l'unité 10 dans le repère $R_T$,
- $v_x$, $v_y$ et $v_z$ sont les composantes du vecteur vitesse $V2_k$ de l'unité 10 dans le repère $R_T$,
- $x_t$ est le biais d'horloge de l'unité 10 par rapport au temps GPS,
- $dx_t$ est la dérive d'horloge de l'unité 10 par rapport au temps GPS.
- h(X) est la fonction de mesure dont la i-ème composante est définie par la relation suivante :

$$h_i(X) = \sqrt{\left(x - xs_{k,i}\right)^2 + \left(y - ys_{k,i}\right)^2 + \left(z - zs_{k,i}\right)^2} + x_t$$

- $Mc3_k$ est le vecteur dont la i-ième composante est $Mc3_{k,i}$,
- $PVT2_{k-1}$ est le vecteur $PVT2_k$ estimé pour l'instant $t_{k-1}$,
- $R_{Mc3}$ est la matrice de covariance des mesures $Mc3_{k,i}$, elle est diagonale et chaque élément diagonal est, ici, fixé à 25m$^2$,
- f est la fonction définie par la relation suivante :

$$f(X) = FX, F = \begin{pmatrix} I_{3\times3} & dt \times I_{3\times3} & 0_{3\times1} & 0_{3\times1} \\ 0_{3\times3} & I_{3\times3} & 0_{3\times1} & 0_{3\times1} \\ 0_{1\times3} & 0_{1\times3} & 1 & dt \\ 0_{1\times3} & 0_{1\times3} & 0 & 1 \end{pmatrix}$$

avec :

- $I_{n \times p}$ est la matrice identité de taille n par p,
- $0_{n \times p}$ est la matrice nulle de taille n par p,
- dt est la période d'échantillonnage, ici elle est égale à $t_k$-$t_{k-1}$,
- $P_{PVT2}$ est une estimation de la matrice de covariance de la solution $PVT2_k$, elle est obtenue à l'aide de la relation suivante :

$$P_{PVT2} = F P_{PVT2,k-1} F^T + Q$$

où :

- $P_{PVT2,k-1}$ est la matrice de covariance de la précédente solution $PVT2_{k-1}$, et
- Q est une matrice symétrique et positive dont les valeurs sont données par la relation suivante :

$$Q = \begin{pmatrix} 0_{3\times3} & 0_{3\times3} & 0_{3\times1} & 0_{3\times1} \\ 0_{3\times3} & dt \times 10 \times I_{3\times3} & 0_{3\times1} & 0_{3\times1} \\ 0_{1\times3} & 0_{1\times3} & dt \times 0.01 & 0 \\ 0_{1\times3} & 0_{1\times3} & 0 & dt \times 0.04 \end{pmatrix}$$

Par exemple, la minimisation de la fonction de coût $f_3$ est effectuée avec la méthode de Gauss-Newton.

Lors d'une étape 124, le module 64 met à jour l'estimation $P_{PVT2}$ de la matrice de covariance de la solution $PVT2_k$ à l'aide de la relation suivante :

$$P_{PVT2,k} = \left( P_{PVT2}^{-1} + H^T R_{Mc3}^{-1} H \right)^{-1}$$

où :

- H est la matrice jacobienne de la fonction h(X) définie ci-dessus lors de l'étape 122, et
- $P_{PVT2}$ est l'estimation de la matrice de covariance calculée lors de l'étape 122.

Pour l'instant initial $t_0$, la solution $PVT2_{-1}$ est définie comme étant le vecteur nul et la matrice de covariance $P_{PVT2,-1}$ est la matrice diagonale définie par la relation suivante :

$$P_{PVT2,-1} = \begin{pmatrix} 10^{12} \times I_{3\times3} & 0_{3\times3} & 0_{3\times1} & 0_{3\times1} \\ 0_{3\times3} & 10^2 \times I_{3\times3} & 0_{3\times1} & 0_{3\times1} \\ 0_{1\times3} & 0_{1\times3} & 10^{12} & 0 \\ 0_{1\times3} & 0_{1\times3} & 0 & 10^2 \end{pmatrix}$$

Un exemple de mode de réalisation de l'étape 112 de sélection des mesures est maintenant décrit en détail en référence au procédé de la figure 5.

Lors d'une opération 130, le module 56 calcule un score $s1_{0,i}$ pour chaque satellite à l'aide de la relation suivante :

$$s1_{0,i} = \frac{1}{N+1}\sum_{j=0}^{N} cn0_i(k-j)$$

où :

- $cn0_i(k-j)$ est la mesure du rapport signal à bruit pour le satellite i à l'instant $t_{k-j}$, et
- N est un nombre entier prédéterminé supérieur à un et, de préférence, supérieur à dix ou vingt.

Typiquement, la mesure $cn0_i(k-j)$ est réalisée lors de l'étape 102 par l'étage 34.

Ensuite, lors d'une opération 132, le module 56 sélectionne les M meilleures mesures au sens du score $s1_{0,i}$. Par exemple, M est égal à huit.

Enfin, un processus de détection et d'exclusion de fautes basé sur une approche par test de sous-ensembles est utilisé pour sélectionner le meilleur sous-ensemble de mesures parmi les M meilleures mesures. Pour limiter les calculs, le nombre maximal de fautes recherchées est limité à Mex=2.

Plus précisément, la sélection du meilleur sous ensemble est effectuée comme suit.

Lors d'une opération 134, le module 56 génère tous les sous-ensembles $E_p$ possibles de M-Mex mesures parmi les M meilleures mesures, où l'indice p est un identifiant du sous-ensemble.

Ensuite, pour chacun des sous-ensembles $E_p$ générés, le module 56 exécute les opérations 136 à 140 suivantes.

Lors de l'opération 136, le module 56 calcule de la position $P1_{k,p}$ issue des mesures du sous-ensemble $E_b$ par minimisation de la fonction de coût $f_1$ suivante :

$$f_1\big(X, Mc1_{k,i}, PVTs_k\big) = \sum_{i\in Ip} \omega_i \left( Mc1_{k,i} - \left( \left\|\begin{matrix} x - xs_{k,i} \\ y - ys_{k,i} \\ z - zs_{k,i} \end{matrix}\right\| + x_{t,k} \right) \right)^2$$

Cette fonction $f_1$ est identique à la fonction $f_1$ utilisée lors de l'étape 114 sauf que l'ensemble Ip est l'ensemble qui contient les indices i des mesures contenues dans le sous-ensemble $E_b$. La position qui minimise cette fonction de coût $f_1$ est trouvée en appliquant, par exemple, le même algorithme que celui mis en oeuvre lors de l'étape 114.

Lors d'une opération 138, le module 56 calcule les métriques suivantes pour chaque sous-ensemble $E_p$ : un résidu $r_p$, une dilution géométrique $GDOP_p$ et une sensibilité maximale de l'erreur de position par rapport au résidu $r_p$ notée $SlopeMax_p$.

Le résidu $r_p$ est égal à la norme du vecteur $r(Mc1_{k,p}, P1_{k,p})$, où :

- $Mc1_{k,p}$ sont les mesures contenues dans le sous-ensemble $E_p$, et
- $r(...)$ est la même fonction que celle définie à l'étape 116.

La dilution géométrique est plus connue sous le terme anglais de "Géométrie dilution of précision". Ici elle est calculée en prenant en compte la position de chacun des satellites dont sont issues les mesures $Mc1_{k,i}$ du sous-ensemble $E_p$ et de la position $P1_{k,p}$.

Le paramètre $SlopeMax_p$ est calculé comme défini dans les pages 105 à 136 du document suivant : Salos Andres, C. D, Integrity monitoring applied to the réception of GNSS signals in urban environments, PhD Thesis, Institut National Polytechnique de Toulouse, 2012.

Lors d'une opération 140, le module 56 calcule pour chaque ensemble $E_p$ un score $s1_{i,p}$ à l'aide de la relation suivante :

$$s1_{1,p} = \alpha_1\big\|r_p\big\|^2 + \alpha_2 GDOP_p + \alpha_3 SlopeMax_p$$

où $\alpha_1$, $a_2$ et $\alpha_3$ sont des coefficients de pondération prédéterminés.

Lors d'une opération 142, le module 56 sélectionne le sous-ensemble $E_p$ qui a le score $s1_{1,p}$ le plus faible. Le sous-ensemble sélectionné est noté $E_{pmin}$.

Lors d'une opération 144, le module 56 valide le meilleur sous-ensemble $E_{pmin}$, en comparant les métriques $r_{pmin}$, $GDOP_{pmin}$ et $SlopeMax_{pmin}$ calculées pour le sous-ensemble $E_{pmin}$, à des seuils prédéterminés, respectivement, Thr0, ThGDOP et ThSlopeMax. Si chacune des métriques $r_{pmin}$, $GDOP_{pmin}$ et $SlopeMax_{pmin}$ est inférieure à son seuil respectif, alors le sous-ensemble $E_{pmin}$ est validé. Dans le cas contraire, la détection de faute est dite impossible, aucune mesure n'est validée. Lorsque aucune mesure n'est validée, les biais $c2_{k,i}$ sont considérés comme inchangés et pris égaux aux biais $c2_{k-1,i}$.

Seulement si le meilleur sous-ensemble $E_{pmin}$ a été validé, lors d'une opération 146, le module 56 calcule la cohérence des mesures restantes par rapport au sous-ensemble $E_{pmin}$ sélectionné. Les mesures restantes sont celles qui n'appartiennent pas au sous-ensemble $E_{pmin}$. La cohérence est testée en comparant à un seuil prédéterminé Thr1 chaque résidu des mesures restantes. Le résidu de chaque mesure restante est calculé à l'aide de la relation suivante :

$$r_i = Mc1_{k,i} - h\big(P1_{k,pmin}\big)$$

où :

- la fonction h() est la même fonction que celle mise en oeuvre lors de l'étape 122, et
- les indices i correspondent ici uniquement aux indices i des mesures restantes.

Une mesure restante est cohérente avec les mesures du sous-ensemble $E_{pmin}$ si le résidu $r_i$ calculé pour cette mesure restante est inférieur à un seuil Thr1 prédéterminé. Ensuite, toutes les mesures restantes cohérentes avec les mesures du sous-ensemble $E_{pmin}$, sont ajoutées dans le sous-ensemble $E_{pmin}$ et donc utilisées pour la suite du processus 52. A l'inverse, les mesures restantes incohérentes, ne sont pas utilisées pour la suite du processus 52.

Chapitre II : Variantes :

Variantes de l'unité de navigation :

L'unité 10 de navigation a été décrite dans le cas particulier où elle est utilisée au sein d'un système de localisation comportant en plus l'unité 12 de mesure inertielle. Toutefois, l'unité 10 peut être utilisée dans tout système de localisation et, en particulier, des systèmes de localisation ne comportant pas d'unité de mesure inertielle ou comportant en plus ou à la place d'autres capteurs comme un odomètre.

Les balises peuvent être des satellites d'une ou plusieurs constellations telles que GPS ("Global Positioning System"), Glonass, Galileo et Beidou.

Ce qui a été décrit dans le cas particulier où les balises sont des satellites, peut être appliqué à tout système de localisation et, en particulier, à des systèmes de localisation où les balises ne sont pas des satellites. Par exemple, ce qui a été décrit ici peut aussi être mis en oeuvre dans le cas où les balises sont des balises fixes sur terre qui émettent des messages. Par exemple, de telles balises fixes peuvent être installées dans un centre commercial pour localiser des piétons ou être installées à proximité d'un téléphérique pour localiser la position d'une télécabine. Ces balises fixes sont par exemple des balises ultra-large bande ou UWB ("Ultra Wide Band"). Le terme "balise ultra-large bande" ou "balise UWB" désigne ici un émetteur-récepteur qui utilise une large bande de fréquences pour envoyer et recevoir les messages. Une "large" bande de fréquences est une bande de fréquences dont la largeur est supérieure à $0,2f_c$, où $f_c$ est la fréquence médiane de cette bande de fréquences. Typiquement, une large bande de fréquences a une largeur supérieure à 250 MHz ou même supérieure à 400 MHz.

A la place d'émettre des ondes électromagnétiques pour transmettre les messages, les balises peuvent émettre des ultrasons. Dans ce cas, la vitesse de propagation des messages dans l'espace est égale à la vitesse du son et non pas à la célérité de la lumière.

Variantes du procédé de localisation :

Pour mesurer une pseudo-distance, il n'est pas nécessaire que les messages émis par les balises comportent l'instant d'émission de ce message. Par exemple, ce n'est pas nécessaire si les horloges des balises et de l'unité de navigation sont synchronisées temporellement entre elles. Dans ce cas, par exemple, les balises émettent les messages à des instants $te_k$ connus de l'unité de navigation de sorte que ces instants $te_k$ n'ont pas besoin d'être contenus dans les messages émis. Selon une autre variante, les instants d'émission $te_{k,i}$ sont calculés par l'unité de navigation, par exemple, à partir d'un instant d'émission d'un message par l'unité de navigation et de l'instant de réception de la réponse à ce message émise par la balise.

L'étape 110 de pré-correction de la mesure brute peut être réalisée différemment. En particulier, il existe d'autres modèles des perturbations introduites par l'ionosphère ou la troposphère utilisables à la place du modèle STANAG. En particulier, le modèle utilisé peut aussi être paramétré par des données contenues dans les messages $Mn_{k,i}$. Dans le cas où les balises ne sont pas des satellites, un autre modèle des perturbations introduites par l'environnement extérieure dans lequel se déplace l'unité de navigation peut être utilisé. Dans un mode de réalisation simplifiée, l'étape 110 de pré-correction des mesures brutes est omise. En effet, dans certains contextes, comme le cas où les balises sont fixées à la surface de la terre, une telle pré-correction peut être inutile.

L'étape 112 de sélection des mesures corrigées peut être réalisées différemment. Par exemple, l'une des méthodes décrites dans les articles suivants sous le nom anglais de "Fault Détection and Exclusion" peut être utilisée à la place de la méthode décrite dans le chapitre I :

- H. Kuusniemi, G. Lachapelle : "GNSS Signal Reliability Testing in Urban and Indoor Environments", Proceedings of the 2004 National Technical Meeting of The Institute of Navigation, San Diego, CA, pp. 210-224, 2004
- N. Zhu : "GNSS Propagation Channel Modeling in Constrained Environments: Contribution to the Improvements of the Geolocation Service Quality", Ph.D thesis, University of Lille FR, 2018

Dans une autre variante de l'étape 112, au lieu d'utiliser la solution $PVT2_{k-1}$ pour effectuer la sélection, c'est la solution $PVT1_{k-1}$ qui est utilisée. D'autres méthodes de sélection du meilleur sous-ensemble de mesures parmi les M meilleures mesures au sens du score $s1_{0,i}$ peuvent être utilisées. D'autres scores que les scores $s1_{0,i}$ et $s1_{1,p}$ peuvent aussi être utilisés pour sélectionner les meilleures mesures.

Dans un mode de réalisation simplifié, l'étape 112 de sélection est omise.

D'autres modes de réalisation de l'étape 114 d'estimation de la position $P1_{k,i}$ sont possibles. Par exemple, en variante, c'est une solution interne $PVT1_{k,i}$ qui est estimée et pas seulement la position interne $P1_{k,i}$. La vitesse interne $V1_{k,i}$ peut être estimée à partir des mesures Doppler extraites par l'étape 34. Dans ce dernier cas, les différentes variantes décrites ci-dessous de l'étape 122 d'estimation de la solution $PVT2_{k,i}$ sont applicables à l'étape 114.

En variante, lors de l'étape 116 les données contenues dans les messages $Mn_{k,i}$ peuvent aussi être prises en compte pour établir les valeurs des biais $c2_{k,i}$. D'autres fonctions de coût sont utilisables à la place de la fonction de coût $f_2$ pour établir les biais $c2_{k,i}$. Par exemple, dans un mode de réalisation simplifié, les biais $c2_{k,i}$ sont établis en minimisant la fonction de coût $f_{2.1}$ suivante :

$$f_{2.1}\big(X, Mc1_{k,i}, P1_k\big) = \big\|r\big(Mc1_{k,}, P1_k\big) - X\big\|_{R_c^{-1}}^2$$

Les biais $c2_{k,i}$ peuvent également être établis en utilisant un filtre de Kalman au lieu de minimiser une fonction de coût.

Il existe encore d'autres méthodes pour estimer les biais $c2_{k,i}$. Par exemple, le processus 52 est remplacé par N processus $52^{(p)}$ qui s'exécutent en parallèle les uns des autres, où l'exposant (p) est un identifiant du processus. L'exposant (p) est un nombre entier compris entre 1 et N. Chaque processus $52^{(p)}$ fournit en sortie des biais respectifs notés $c2_{k,i}^{(p)}$. Ici, les biais de mesures $c2_{k,i}^{(p)}$ sont établis par chaque processus $52^{(p)}$ en exécutant les étapes 110, 112, 114 et 116 précédemment décrites mais avec des paramètres différents de ceux utilisés par les autres processus $52^{(p)}$. Dans cet exemple, la fonction $f_2$ est paramétrée par les matrices $R_c$ et $P_{c,k-1}$ et chaque processus $52^{(p)}$ correspond à des valeurs spécifiques des coefficients de ces matrices $R_c$ et $P_{c,k-1}$. Par exemple, le processus $52^{(1)}$ utilise des matrices $R_c^{(1)}$ et $P_{c,k-1}^{(1)}$ identiques aux matrices $R_c$ et $P_{c,k-1}$ utilisées dans le cas du procédé de la figure 4. Le processus $52^{(2)}$ utilise des matrices, respectivement $R_c^{(2)}$ et $P_{c,k-1}^{(2)}$, dont les coefficients sont par exemple dix fois inférieures aux coefficients correspondants des matrices $R_c^{(1)}$ et $P_{c,k-1}^{(1)}$. A l'inverse, le processus $52^{(3)}$ utilise des matrices, respectivement $R_c^{(3)}$ et $P_{c,k-1}^{(3)}$, dont les coefficients sont par exemple dix fois supérieures aux coefficients correspondants des matrices $R_c^{(1)}$ et $P_{c,k-1}^{(1)}$.

Ensuite, le meilleur jeu de biais $c2_{k,i}^{(p)}$ est sélectionné parmi les N jeux de biais $c2_{k,i}^{(p)}$ établis par les processus 52 (p). Chaque biais $c2_{k,i}$ est alors pris égal au biais $c2_{k,i}^{(p)}$ du meilleur jeu de biais $c2_{k,i}^{(p)}$. Par exemple, le critère utilisé pour sélectionner le meilleur jeu de biais $c2_{k,i}^{(p)}$ est la norme de l'innovation notée $nino^{(p)}$ et chaque biais $c2_{k,i}$ est égal au biais $c2_{k,i}^{(p)}$ du jeu de biais $c2_{k,i}^{(p)}$ qui possède la plus faible valeur $nino^{(p)}$. Par exemple, la norme $nino^{(p)}$ du jeu de biais $c2_{k,i}^{(p)}$ est définie par la relation suivante :

$$nino^{(p)} = \Big\| Mc2_k - c2_k^{(p)} - h\big(f\big(PVT2_{k-1}\big)\big) \Big\|$$

où :

- $Mc2_k$ est le vecteur dont les coefficients sont les mesures corrigées $Mc2_{k,i}$,
- $c2_k(p)$ est le vecteur dont les coefficient sont les biais $c2_{k,i}^{(p)}$,
- $PVT2_{k-1}$ est le vecteur $PVT2_k$ estimé pour l'instant $t_{k-1}$,
- les fonctions h() et f() sont les mêmes que celles utilisées dans la fonction $f_3$ précédemment décrite.

Après l'étape 116 d'établissement des biais $c2_{k,i}$ et avant l'étape 120 de correction des mesures $Mb_{k,i}$ avec les biais $c2_{k,i}$, le procédé peut comporter d'autres étapes. Par exemple, le procédé comporte une étape de test sur la mise à jour des biais de mesure $c2_{k,i}$. Cette étape de test permet de détecter si la mise à jour des biais $c2_{k,i}$ est conforme à un indicateur de confiance tel que l'écart type attendu. Par exemple, le test effectué est le test défini par la relation suivante pour chacun des indices i de l'ensemble $I_{pmin}$ :

$$\left| r_i\left(Mc1_{k,i}, P1_k\right) - c2_{k-1} \right| < \alpha\sqrt{(R_c + P_c)_{ii}}$$

où :

- $r_i(Mc1_{k,i}, P1_k)$ est la même fonction que celle précédemment définie lors de l'étape 116, et
- la notation $(M)_{ii}$ désigne le i-ème élément diagonal de la matrice M,
- $R_c$ et $P_c$ sont les mêmes matrices que celles définies lors de l'étape 116,
- $\alpha$ est un coefficient prédéterminé fixé par l'utilisateur.

Si pour chacun des indices i de l'ensemble $I_{pmin}$, le test ci-dessus est satisfait, alors la mise à jour est acceptée. Dans le cas contraire la mise à jour est supprimée est les valeurs des biais $c2_{k,i}$ sont inchangées, c'est-à-dire qu'elles sont prises égales aux valeurs des biais $c2_{k-1,i}$.

D'autres indicateurs de confiance peuvent être établis quant à la précision des biais $c2_{k,i}$ établis. Par exemple, dans le cas où les biais $c2_{k,i}$ sont établis par un filtre de Kalman, la covariance associée à chaque biais $c2_{k,i}$ estimée est un tel indicateur de précision.

Après l'étape 116 d'établissement des biais $c2_{k,i}$ et avant l'étape 120 de correction des mesures $Mb_{k,i}$ avec les biais $c2_{k,i}$, le procédé peut aussi comporter une étape de filtrage des biais $c2_{k,i}$, par exemple à l'aide d'une moyenne glissante ou d'un filtre de Kalman, afin de les rendre leur estimation plus précise. C'est ensuite les biais filtrés qui sont utilisés pour obtenir les mesures corrigées $Mc3_{k,i}$.

L'étape 118 peut être exécutée avant l'une des étapes 110, 112 et 114.

En variante, lors de l'étape 118, les mesures pré-corrigées $Mc2_{k,i}$ sont simplement prises égales aux mesures pré-corrigées $Mc1_{k,i}$. En variante l'étape 118 est omise.

Entre les étapes 118 et 120, en variante, le module 62 sélectionne les mesures pré-corrigées $Mc2_{k,i}$ qui sont ensuite les seuls à être utilisées dans la suite du processus 54. Par exemple, le module 62 réalise cette étape de sélection de la même manière que l'étape 112 ou ses variantes.

De nombreuses variantes de l'étape 122 d'estimation de la solution $PVT2_{k,i}$ sont possibles. Par exemple, la solution $PVT2_{k,i}$ peut aussi être estimée en prenant en compte les données contenues dans les messages $Mn_{k,i}$.

Le calcul de la solution $PVT2_k$ décrit utilise, entre autres données d'entrée, une matrice $R_{Mc3}$ définissant la précision de chacune des mesures. Cette matrice $R_{Mc3}$ peut ne peut pas être constante. Par exemple, elle est ajustée en fonction de la correction de biais appliquée à l'étape 118 ainsi que de la confiance accordée à cette correction, afin de mieux refléter l'incertitude de chaque mesure à l'issue de cette correction.

De nombreux autres algorithmes peuvent être utilisés pour déterminer une position, une solution PT ou une solution PVT à partir des données d'entrée. Par exemple, des filtres de Kalman, des filtres particulaires ou des algorithmes d'intelligence artificielle peuvent aussi être utilisés. De plus, comme illustré dans le mode de réalisation du chapitre I, le calcul d'une position, d'une solution PT ou d'une solution PVT peut également se faire à partir d'un sous-ensemble des signaux d'entrée disponible. Autrement dit, certains signaux peuvent être délibérément exclus du calcul s'il est déterminé qu'ils présentent une mesure fortement erronée. Les algorithmes de sélection des signaux satellitaires sont nombreux et connus de l'homme de l'art.

Dans un mode de réalisation simplifié, l'unité 10 délivre seulement sa position. Sa vitesse et son erreur d'horloge ne sont pas calculés ou ne sont pas délivrés au calculateur 20. Lorsque l'erreur d'horloge n'est pas calculée, le nombre minimum de satellites nécessaires pour déterminer la position de l'unité 10 est égal à trois. De plus, dans ce cas, les mesures brutes peuvent contenir seulement les pseudo-distances. Les autres mesures, comme l'effet Doppler, sont omises.

Chapitre III : Avantages des modes de réalisation décrits :

Puisque les biais sont établis en prenant en compte la position interne de l'unité de navigation, les biais sont plus précis que ceux calculés sans prendre en compte la position de l'unité de navigation. De plus, puisque les biais sont établis sans prendre en compte la position externe de l'unité de navigation, la stabilité et la robustesse du procédé de localisation est améliorée. En effet, une erreur lors de l'établissement des biais peut se propager sur l'estimation de la position externe. Par contre, l'erreur sur l'estimation de la position externe ne peut pas se propager sur l'établissement du biais. Ainsi, la stabilité et la robustesse du procédé de localisation sont accrues sans pour autant détériorer la précision.

Le fait de sélectionner, à l'aide de la position externe à l'instant précédent $t_{k-1}$, les balises dont les messages sont ensuite traités pour établir les biais de mesure, permet d'améliorer la fiabilité et la précision de cette sélection car la position externe est plus précise que la position interne. Cela permet donc d'établir plus précisément les biais de mesure et donc d'obtenir une position externe plus précise à l'instant $t_k$. De plus, cela ne compromet pas la robustesse du procédé de localisation car la position externe intervient seulement sur la sélection des messages traités. En particulier, la position externe n'intervient pas sur le contenus de ces messages, leurs instants de réception et lors des traitements exécutés pour établir les biais de mesure.

Le fait de minimiser l'écart entre les biais de mesure pour les instants $t_k$ et $t_{k-1}$ augmente la précision de la localisation.

L'utilisation du modèle paramétré pour estimer l'erreur causée par la propagation des messages des balises à travers la ionosphère ou la troposphère permet d'augmenter la précision de la localisation.

**Revendications**

1. Procédé de localisation d'une unité de navigation dans un environnement comportant des balises qui émettent des messages, ce procédé comportant l'exécution des étapes suivantes pour chaque instant $t_k$ d'une suite temporelle d'instants $\{t_0; ...; t_{k-1}; t_k; ...\}$ :

   a) la réception (100) des messages émis par au moins trois balises, puis
   b) l'extraction (102) de mesures brutes de pseudo-distances qui séparent l'unité de navigation de chacune de ces au moins trois balises à partir des instants de réception de ces messages mesurés par l'unité de navigation et de la vitesse de propagation de ces messages dans l'espace,
   c) l'estimation (114) d'une position interne de l'unité de navigation à l'instant $t_k$ à partir des mesures brutes extraites pour cet instant $t_k$, de la précédente position interne de l'unité de navigation estimée à l'instant $t_{k-1}$ et des positions des balises,
   d) pour plusieurs balises, l'établissement (116) d'un biais de mesure pour l'instant $t_k$ qui, lorsqu'il est retranché à la mesure brute extraite à partir de l'instant de réception du message émis par cette balise, permet de diminuer l'erreur entachant cette mesure brute, ce biais étant établi à partir de l'écart entre :

   - une pseudo-distance calculée qui sépare cette balise de l'unité de navigation, cette pseudo-distance calculée étant calculée à partir d'une position de cette balise et de la position interne de l'unité de navigation estimée pour l'instant $t_k$, et
   - une pseudo-distance mesurée qui sépare cette balise de l'unité de navigation, cette pseudo-distance mesurée étant calculée à partir de la mesure brute de la pseudo-distance extraite pour cette balise pour l'instant $t_k$ et sans prendre en compte la position interne de l'unité de navigation,

   e) pour chaque balise pour laquelle un biais de mesure a été établi pour l'instant $t_k$, le calcul (120) d'une mesure corrigée de la pseudo-distance à l'instant $t_k$ en ajoutant le biais établi pour cette balise à une mesure brute de la pseudo-distance pour cette balise extraite à l'instant $t_k$,

   **caractérisé en ce que** le procédé comporte également l'étape suivante :

   f) l'estimation (122) d'une position externe de l'unité de navigation à l'instant $t_k$ à partir :

   - des positions des balises pour lesquelles une mesure corrigée de la pseudo-distance à l'instant $t_k$ a été calculée,
   - des mesures corrigées des pseudo-distances calculées pour l'instant $t_k$, et
   - de la précédente position externe de l'unité de navigation estimée pour l'instant précédent $t_{k-1}$, et

dans lequel les étapes b), c) et d) sont réalisées sans prendre en compte la position externe de l'unité de navigation.

2. Procédé selon la revendication 1, dans lequel :

- le procédé comporte, après l'étape b) et avant l'étape c), la sélection (112), en fonction de la position externe de l'unité de navigation à l'instant précédent $t_{k-1}$, d'un nombre limité de mesures brutes extraites parmi l'ensemble des mesures brutes extraites lors de l'étape b) pour l'instant $t_k$, puis
- lors des étapes c) et d) seuls les mesures brutes ainsi sélectionnées sont utilisées et les mesures brutes non-sélectionnées sont ignorées.

3. Procédé selon l'une quelconque des revendications précédentes, dans lequel chaque biais de mesure pour l'instant $t_k$ est également établi (116) en minimisant l'écart entre ce biais de mesure pour l'instant $t_k$ et le biais de mesure établi pour l'instant précédent $t_{k-1}$.

4. Procédé selon l'une quelconque des revendications précédentes, dans lequel chaque balise est un satellite en orbite autour de la terre.

5. Procédé selon la revendication 4, dans lequel :

- après l'étape b) et avant l'étape c), le procédé comporte une étape (110) de pré-correction des mesures brutes extraites, cette étape de pré-correction comportant pour chaque balise ayant émis un message à partir duquel est extrait une pseudo-distance :

- l'établissement d'une erreur causée par la propagation du message de cette balise à travers la ionosphère ou la troposphère en utilisant pour cela un modèle prédéterminé paramétré par la position interne de l'unité de navigation estimée pour l'instant précédent $t_{k-1}$, puis
- la soustraction de l'erreur établie à la mesure brute extraite pour obtenir une mesure brute pré-corrigée, puis

- lors des étapes c) et d), ce sont les mesures brutes pré-corrigées qui sont utilisées.

6. Support (40) d'enregistrement d'informations, lisible par un microprocesseur, comportant des instructions exécutables par ce microprocesseur, **caractérisé en ce que** ce support comporte des instructions non transitoires pour l'exécution d'un procédé de localisation conforme à l'une quelconque des revendications précédentes, lorsque ces instructions sont exécutées par le microprocesseur.

7. Unité (10) de navigation apte à se déplacer dans un environnement comportant des balises qui émettent des messages, cette unité de navigation comportant un microprocesseur (38) configuré pour exécuter les étapes suivantes pour chaque instant $t_k$ d'une suite temporelle d'instants $\{t_0; ...; t_{k-1}; t_k; ...\}$ :

a) la réception des messages émis par au moins trois balises, puis
b) l'extraction de mesures brutes de pseudo-distances qui séparent l'unité de navigation de chacune de ces au moins trois balises à partir des instants de réception de ces messages mesurés par l'unité de navigation et de la vitesse de propagation de ces messages dans l'espace,
c) l'estimation d'une position interne de l'unité de navigation à l'instant $t_k$ à partir des mesures brutes extraites pour cet instant $t_k$, de la précédente position interne de l'unité de navigation estimée à l'instant $t_{k-1}$ et des positions des balises,
d) pour plusieurs balises, l'établissement d'un biais de mesure pour l'instant $t_k$ qui, lorsqu'il est retranché à la mesure brute extraite à partir de l'instant de réception du message émis par cette balise, permet de diminuer l'erreur entachant cette mesure brute, ce biais étant établi à partir de l'écart entre :

- une pseudo-distance calculée qui sépare cette balise de l'unité de navigation, cette pseudo-distance calculée étant calculée à partir d'une position de cette balise et de la position interne de l'unité de navigation estimée pour l'instant $t_k$, et
- une pseudo-distance mesurée qui sépare cette balise de l'unité de navigation, cette pseudo-distance mesurée étant calculée à partir de la mesure brute de la pseudo-distance extraite pour cette balise pour l'instant $t_k$ et sans prendre en compte la position interne de l'unité de navigation,

e) pour chaque balise pour laquelle un biais de mesure a été établi pour l'instant $t_k$, le calcul d'une mesure corrigée de la pseudo-distance à l'instant $t_k$ en ajoutant le biais établi pour cette balise à une mesure brute de la pseudo-distance pour cette balise extraite à l'instant $t_k$,

**caractérisé en ce que** le microprocesseur (38) est également configuré pour exécuter l'étape suivante :

f) l'estimation (122) d'une position externe de l'unité de navigation à l'instant $t_k$ à partir :

- des positions des balises pour lesquelles une mesure corrigée de la pseudo-distance à l'instant $t_k$ a été calculée,
- des mesures corrigées des pseudo-distances calculées pour l'instant $t_k$, et
- de la précédente position externe de l'unité de navigation estimée pour l'instant précédent $t_{k-1}$, et

dans lequel les étapes b), c) et d) sont réalisées sans prendre en compte la position externe de l'unité de navigation.

**Patentansprüche**

1. Verfahren zur Lokalisierung einer Navigationseinheit in einer Umgebung, die Funkbaken umfasst, die Nachrichten senden, wobei dieses Verfahren die Ausführung der folgenden Schritte für jeden Zeitpunkt $t_k$ einer zeitlichen Folge von Zeitpunkten $\{t_0; ...; t_{k-1}; t_k; ...\}$ umfasst:

a) das Empfangen (100) der Nachrichten, die von mindestens drei Funkbaken gesendet werden, dann
b) das Extrahieren (102) von Rohmessungen von Pseudoabständen, die die Navigationseinheit von jeder dieser mindestens drei Funkbaken trennen, anhand der Empfangszeitpunkte dieser Nachrichten, die von der Navigationseinheit gemessen werden, und von Ausbreitungsgeschwindigkeit dieser Nachrichten im Raum,
c) das Schätzen (114) einer internen Position der Navigationseinheit zu dem Zeitpunkt $t_k$ anhand der Rohmessungen, die für diesen Zeitpunkt $t_k$ extrahiert werden, der vorhergehenden internen Position der Navigationseinheit, die zu dem Zeitpunkt $t_{k-1}$ geschätzt wird, und der Positionen der Funkbaken,
d) für mehrere Funkbaken, das Ermitteln (116) eines Messbias für den Zeitpunkt $t_k$, das es, wenn es von der Rohmessung abgezogen wird, die anhand des Empfangszeitpunkts der von dieser Funkbake gesendeten Nachricht extrahiert wird, ermöglicht, den Fehler, mit dem diese Rohmessung behaftet ist, zu verringern, wobei dieses Bias ermittelt wird anhand der Abweichung zwischen:

- einem berechneten Pseudoabstand, der diese Funkbake von der Navigationseinheit trennt, wobei dieser berechnete Pseudoabstand anhand einer Position dieser Funkbake und der internen Position der Navigationseinheit, die für den Zeitpunkt $t_k$ geschätzt wird, berechnet wird, und
- einem gemessenen Pseudoabstand, der diese Funkbake von der Navigationseinheit trennt, wobei dieser gemessene Pseudoabstand anhand der Rohmessung des Pseudoabstands, die für diese Funkbake für den Zeitpunkt $t_k$ extrahiert wird, und ohne die interne Position der Navigationseinheit zu berücksichtigen berechnet wird,

e) für jede Funkbake, für die ein Messbias für den Zeitpunkt $t_k$ ermittelt worden ist, das Berechnen (120) einer korrigierten Messung des Pseudoabstands zu dem Zeitpunkt $t_k$, indem das ermittelte Bias für diese Funkbake zu einer Rohmessung des Pseudoabstands für diese Funkbake, die zu dem Zeitpunkt $t_k$ extrahiert wird, addiert wird,

**dadurch gekennzeichnet, dass** das Verfahren auch den folgenden Schritt umfasst:

f) das Schätzen (122) einer externen Position der Navigationseinheit zu dem Zeitpunkt $t_k$ anhand:

- der Positionen der Funkbaken, für die eine korrigierte Messung des Pseudoabstands zu dem Zeitpunkt $t_k$ berechnet worden ist,
- der korrigieren Messungen der Pseudoabstände, die für den Zeitpunkt $t_k$ berechnet werden, und
- der vorhergehenden externen Position der Navigationseinheit, die für den vorhergehenden Zeitpunkt $t_{k-1}$ geschätzt wird, und

wobei die Schritte b), c) und d) ausgeführt werden, ohne die externe Position der Navigationseinheit zu berücksichtigen.

2. Verfahren nach Anspruch 1, wobei:

- das Verfahren, nach dem Schritt b) und vor dem Schritt c), das Auswählen (112), in Abhängigkeit von der externen Position der Navigationseinheit zu dem vorhergehenden Zeitpunkt $t_{k-1}$, einer begrenzten Anzahl von extrahierten Rohmessungen aus der Gesamtheit der bei dem Schritt b) für den Zeitpunkt $t_k$ extrahierten Rohmessungen umfasst, dann
- bei Schritten c) und d) nur die so ausgewählten Rohmessungen verwendet werden und die nicht ausgewählten Rohmessungen außer Acht gelassen werden.

3. Verfahren nach einem der vorhergehenden Ansprüche, wobei jedes Messbias für den Zeitpunkt $t_k$ auch ermittelt wird (116), indem die Abweichung zwischen diesem Messbias für den Zeitpunkt $t_k$ und dem für den vorhergehenden Zeitpunkt $t_{k-1}$ ermittelten Messbias minimiert wird.

4. Verfahren nach einem der vorhergehenden Ansprüche, wobei jede Funkbake ein Satellit im Orbit um die Erde ist.

5. Verfahren nach Anspruch 4, wobei:

- das Verfahren, nach dem Schritt b) und vor dem Schritt c), einen Schritt (110) des Vorkorrigierens der extrahierten Rohmessungen umfasst, wobei dieser Schritt des Vorkorrigierens für jede Funkbake, die eine Nachricht gesendet hat, anhand der ein Pseudoabstand extrahiert wird, umfasst:
- das Ermitteln eines Fehlers, der durch die Ausbreitung der Nachricht dieser Funkbake durch die Ionosphäre oder die Troposphäre hindurch verursacht wird, indem dazu ein vorbestimmtes Modell verwendet wird, das durch die interne Position der Navigationseinheit parametriert ist, die für den vorhergehenden Zeitpunkt $t_{k-1}$ geschätzt wird, dann
- das Subtrahieren des ermittelten Fehlers von der extrahierten Rohmessung, um eine vorkorrigierte Rohmessung zu erhalten, dann
- bei den Schritten c) und d) die vorkorrigierten Rohmessungen verwendet werden.

6. Medium (40) zur Aufzeichnung von Informationen, das von einem Mikroprozessor gelesen werden kann und von diesem Mikroprozessor ausführbare Anweisungen umfasst, **dadurch gekennzeichnet, dass** dieses Medium nichttransitorische Anweisungen umfasst, die bei der Ausführung dieser Anweisungen durch den Mikroprozessor ein Verfahren zur Lokalisierung nach einem der vorhergehenden Ansprüche ausführen.

7. Navigationseinheit (10), die geeignet ist, sich in einer Umgebung zu bewegen, die Funkbaken umfasst, die Nachrichten senden, wobei diese Navigationseinheit einen Mikroprozessor (38) umfasst, der dazu ausgestaltet ist, die folgenden Schritte für jeden Zeitpunkt $t_k$ einer zeitlichen Folge von Zeitpunkten $\{t_0; ...; t_{k-1}; t_k; ...\}$ auszuführen:

a) das Empfangen der Nachrichten, die von mindestens drei Funkbaken gesendet werden, dann
b) das Extrahieren von Rohmessungen von Pseudoabständen, die die Navigationseinheit von jeder dieser mindestens drei Funkbaken trennen, anhand der Empfangszeitpunkte dieser Nachrichten, die von der Navigationseinheit gemessen werden, und von der Ausbreitungsgeschwindigkeit dieser Nachrichten im Raum,
c) das Schätzen einer internen Position der Navigationseinheit zu dem Zeitpunkt $t_k$ anhand der Rohmessungen, die für diesen Zeitpunkt $t_k$ extrahiert werden, der vorhergehenden internen Position der Navigationseinheit, die zu dem Zeitpunkt $t_{k-1}$ geschätzt wird, und der Positionen der Funkbaken,
d) für mehrere Funkbaken, das Ermitteln eines Messbias für den Zeitpunkt $t_k$, das es, wenn es von der Rohmessung abgezogen wird, die anhand des Empfangszeitpunkts der von dieser Funkbake gesendeten Nachricht extrahiert wird, ermöglicht, den Fehler, mit dem diese Rohmessung behaftet ist, zu verringern, wobei dieses Bias ermittelt wird anhand der Abweichung zwischen:

- einem berechneten Pseudoabstand, der diese Funkbake von der Navigationseinheit trennt, wobei dieser berechnete Pseudoabstand anhand einer Position dieser Funkbake und der internen Position der Navigationseinheit, die für den Zeitpunkt $t_k$ geschätzt wird, berechnet wird, und
- einem gemessenen Pseudoabstand, der diese Funkbake von der Navigationseinheit trennt, wobei dieser gemessene Pseudoabstand anhand der Rohmessung des Pseudoabstands, die für diese Funkbake für den Zeitpunkt $t_k$ extrahiert wird, und ohne die interne Position der Navigationseinheit zu berücksichtigen berechnet wird,

e) für jede Funkbake, für die ein Messbias für den Zeitpunkt $t_k$ ermittelt worden ist, das Berechnen einer korrigierten Messung des Pseudoabstands zu dem Zeitpunkt $t_k$, indem das ermittelte Bias für diese Funkbake zu einer Rohmessung des Pseudoabstands für diese Funkbake, die zu dem Zeitpunkt $t_k$ extrahiert wird, addiert wird,

**dadurch gekennzeichnet, dass** der Mikroprozessor (38) auch dazu ausgestaltet ist, den folgenden Schritt auszuführen:

f) das Schätzen (122) einer externen Position der Navigationseinheit zu dem Zeitpunkt $t_k$ anhand:

- der Positionen der Funkbaken, für die eine korrigierte Messung des Pseudoabstands zu dem Zeitpunkt $t_k$ berechnet worden ist,
- der korrigieren Messungen der Pseudoabstände, die für den Zeitpunkt $t_k$ berechnet werden, und
- der vorhergehenden externen Position der Navigationseinheit, die für den vorhergehenden Zeitpunkt $t_{k-1}$ geschätzt wird, und

wobei die Schritte b), c) und d) ausgeführt werden, ohne die externe Position der Navigationseinheit zu berücksichtigen.

## Claims

1. Method for locating a navigation unit in an environment containing beacons transmitting messages, this method comprising execution of the following steps for each time $t_k$ of a temporal sequence of times $\{t_0; ...; t_{k-1}; t_k; ...\}$:

a) receiving (100) messages transmitted by at least three beacons, then
b) extracting (102) raw measurements of pseudoranges separating the navigation unit from each of these at least three beacons based on the times of receipt of these messages as measured by the navigation unit and on the speed of propagation of these messages through space,
c) estimating (114) an internal position of the navigation unit at the time $t_k$ based on the raw measurements extracted for this time $t_k$, on the preceding internal position of the navigation unit estimated at the time $t_{k-1}$ and on the positions of the beacons,
d) for a plurality of beacons, establishing (116) a measurement bias for the time $t_k$ that, when it is subtracted from the raw measurement extracted based on the time of receipt of the message transmitted by this beacon, allows the error affecting this raw measurement to be decreased, this bias being established based on the difference between:

- computed pseudorange separating this beacon from the navigation unit, this computed pseudorange being computed based on a position of this beacon and on the internal position of the navigation unit estimated for the time $t_k$, and
- measured pseudorange separating this beacon from the navigation unit, this measured pseudorange being computed based on the raw pseudorange measurement extracted for this beacon for the time $t_k$ and without taking into account the internal position of the navigation unit,

e) for each beacon for which a measurement bias was established for the time $t_k$, computing (120) a corrected measurement of the pseudorange at the time $t_k$ by adding the bias established for this beacon to a raw measurement of the pseudorange for this beacon extracted at the time $t_k$,

**characterized in that** the method also comprises the following step:

f) estimating (122) an external position of the navigation unit at the time $t_k$ based on:

- positions of the beacons for which a corrected measurement of the pseudorange at the time $t_k$ was computed,
- corrected pseudorange measurements computed for the time $t_k$, and
- the preceding external position of the navigation unit estimated for the preceding time $t_{k-1}$, and

in which steps b), c) and d) are carried out without taking into account the external position of the navigation unit.

2. Method according to Claim 1, wherein:

- the method comprises, after step b) and before step c), selecting (112), depending on the external position of the navigation unit at the preceding time $t_{k-1}$, a limited number of raw measurements extracted from all the raw measurements extracted in step b) for the time $t_k$, then
- in steps c) and d) only the raw measurements thus selected are used and the raw measurements not selected are ignored.

3. Method according to any one of the preceding claims, wherein each measurement bias for the time $t_k$ is also established (116) by minimizing the difference between this measurement bias for the time $t_k$ and the measurement bias established for the preceding time $t_{k-1}$.

4. Method according to any one of the preceding claims, wherein each beacon is a satellite in orbit around the Earth.

5. Method according to Claim 4, wherein:

- after step b) and before step c), the method comprises a step (110) of pre-correcting the extracted raw measurements, this pre-correcting step comprising, for each beacon having transmitted a message based on which a pseudorange is extracted:
- establishing an error caused by propagation of the message of this beacon through the ionosphere or the troposphere, a predetermined model parametrized by the internal position of the navigation unit estimated for the preceding time $t_{k-1}$ being used to do this, then
- subtracting the established error from the extracted raw measurement to obtain a pre-corrected raw measurement, then
- in steps c) and d), it is the pre-corrected raw measurements that are used.

6. Data storage medium (40) that is readable by a microprocessor, comprising instructions that are executable by this microprocessor, **characterized in that** this medium comprises non-transitory instructions for executing a locating method according to any one of the preceding claims, when these instructions are executed by the microprocessor.

7. Navigation unit (10) able to move through an environment containing beacons transmitting messages, this navigation unit comprising a microprocessor (38) configured to execute the following steps for each time $t_k$ of a temporal sequence of times $\{t_0; ...; t_{k-1}; t_k; ...\}$ :

a) receiving messages transmitted by at least three beacons, then
b) extracting raw measurements of pseudoranges separating the navigation unit from each of these at least three beacons based on the times of receipt of these messages as measured by the navigation unit and on the speed of propagation of these messages through space,
c) estimating an internal position of the navigation unit at the time $t_k$ based on the raw measurements extracted for this time $t_k$, on the preceding internal position of the navigation unit estimated at the time $t_{k-1}$ and on the positions of the beacons,
d) for a plurality of beacons, establishing a measurement bias for the time $t_k$ that, when it is subtracted from the raw measurement extracted based on the time of receipt of the message transmitted by this beacon, allows the error affecting this raw measurement to be decreased, this bias being established based on the difference between:

- computed pseudorange separating this beacon from the navigation unit, this computed pseudorange being computed based on a position of this beacon and on the internal position of the navigation unit estimated for the time $t_k$, and
- measured pseudorange separating this beacon from the navigation unit, this measured pseudorange being computed based on the raw pseudorange measurement extracted for this beacon for the time $t_k$ and without taking into account the internal position of the navigation unit,

e) for each beacon for which a measurement bias was established for the time $t_k$, computing a corrected measurement of the pseudorange at the time $t_k$ by adding the bias established for this beacon to a raw measurement of the pseudorange for this beacon extracted at the time $t_k$,

**characterized in that** the microprocessor (38) is also configured to execute the following step:

f) estimating (122) an external position of the navigation unit at the time $t_k$ based on:

- positions of the beacons for which a corrected measurement of the pseudorange at the time $t_k$ was computed,
- corrected pseudorange measurements computed for the time $t_k$, and
- the preceding external position of the navigation unit estimated for the preceding time $t_{k-1}$, and

in which steps b), c) and d) are carried out without taking into account the external position of the navigation unit.

Fig. 1

Fig. 2

Fig. 3

| 100 |

| 102 |

| 104 |

| 110 |

| 112 |

| 114 |

| 116 |

| 118 |

| 120 |

| 122 |

| 124 |

# Fig. 4

| 130 |

| 132 |

| 134 |

| 136 |

| 138 |

| 140 |

| 142 |

| 144 |

| 146 |

# Fig. 5

**EP 4 290 267 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015268354 A1
- US 6324472 B1
- FR 3066027 A1

**Littérature non-brevet citée dans la description**

- **DE AI QUINGSONG et al.** Evaluation and mitigation of the influence of pseudorange biaises on GNSS satellite clock offset estimation. *Measurement, Institute of Measurement and Control,* 10 Mars 2022, vol. 193
- **A. GIREMUS ; J.-Y. TOURNERET.** A particle filtering approach for joint detection/ estimation of multipath effects on GNSS measurements. *IEEE Trans. Signal Processing,* 2007
- **S. GODHA.** Performance Evaluation of Low Cost MEMS-Based IMU Integrated With GPS for Land Vehicle Navigation Application. *PhD report,* 2006
- Global navigation satellite system Glonass ICD Navigational radiosignal in bands L1, L2, Edition 5.1. *Russian Institute of Space Device Engineering,* 2008, 41-49
- Navstar GPS Space Segment/Navigation User Interfaces,. **REVISION D.** IS-GPS-200. ARINC, Mars 2006, 83-98

- Assessment and Development of a Tropospheric Delay Model for Aircraft Uservv of the Global Positioning System. **COLLINS, J.P.** Technical Report. University of New Brunswick, 1999, 96-97
- **SALOS ANDRES, C. D.** Integrity monitoring applied to the réception of GNSS signals in urban environments. *PhD Thesis, Institut National Polytechnique de Toulouse,* 2012
- **H. KUUSNIEMI ; G. LACHAPELLE.** GNSS Signal Reliability Testing in Urban and Indoor Environments. *Proceedings of the 2004 National Technical Meeting of The Institute of Navigation, San Diego, CA,* 2004, 210-224
- GNSS Propagation Channel Modeling in Constrained Environments: Contribution to the Improvements of the Geolocation Service Quality. **N. ZHU.** Ph.D thesis. University of Lille FR, 2018